# EUROPÄISCHE PATENTSCHRIFT

(11) **EP 1 927 764 B1**
(45) Veröffentlichungstag und Bekanntmachung des Hinweises auf die Patenterteilung: **26.05.2010**
(21) Anmeldenummer: 07033553.4
(22) Anmeldetag: 16.11.2007
(51) Int. Cl.: F16B 11/00, H01M 8/24, H01M 8/02

(54) **Brennstoffzellenanordnung aus durch Fügematerial verbundenen Körpern**
Fuel cell assembly made of bodies connected with joining material
Agencement de pile à combustible constitué de corps liés par des matériaux de jonction

(30) Priorität: 30.11.2006 DE 102006056675
(43) Veröffentlichungstag der Anmeldung: 04.06.2008
(73) Patentinhaber: Forschungszentrum Jülich GmbH, 52425 Jülich (DE)
(72) Erfinder: Ringel, Helmut, 52382 Niederzier (DE)

(56) Entgegenhaltungen:
- EP-A- 1 246 283
- DE-A1- 19 718 687
- DE-C1- 4 138 349
- JP-A- 4 071 167
- JP-A- 62 295 369

## Beschreibung

Die Erfindung betrifft eine Brennstoffzellenanordnung aus durch ein Fügematerial verbundenen Körpern, insbesondere einen Hochtemperatur-Brennstoffzellenstapel. Solche Anordnungen sind aus der EP 1 246 283 oder der DE/9718687 bekannt.

### Stand der Technik

Ein Hochtemperatur-Brennstoffzellenstapel mit planaren Brennstoffzellen besteht aus einer Aufeinanderschichtung von Zellen und Interkonnektoren. Im Randbereich werden die Zellen und die Interkonnektoren in der Regel mit Glaslot mechanisch verbunden, wobei sie zugleich gasdicht und elektrisch isolierend abgedichtet werden.

Hierzu wird der Brennstoffzellenstapel auf etwa 900 °C erwärmt und über eine äußere Kraft zusammen gepresst. Durch die Erwärmung wird das Glaslot weich und füllt die Fugen zwischen Zellen, Interkonnektoren und Gehäuse des Brennstoffzellenstapels. Zugleich bewirkt die Anpresskraft auch die elektrische Kontaktierung der Zellen und Interkonnektoren im inneren Arbeitsbereich der Zellen.

Nachteilig kristallisiert das Glaslot bereits nach wenigen Stunden Betriebszeit, wodurch es versprödet. Dadurch wird es bruchempfindlich. Insbesondere kann versprödetes Glaslot keine Zugspannungen aufnehmen. Daher muss die Kraft, die den Brennstoffzellenstapel zusammen presst, permanent aufrechterhalten werden. Dies ist insbesondere beim Transport des Stapels ein Problem und stellt zugleich einen begrenzenden Faktor für die Lebensdauer dar. Die Verspannungsvorrichtung, die die Kraft ausübt, ist zudem teuer und benötigt zusätzlichen Einbauraum, der beim mobilen Einsatz in Fahrzeugen regelmäßig nicht zur Verfügung steht.

### Aufgabe und Lösung

Es ist daher die Aufgabe der Erfindung, eine Anordnung von mit Fügematerial verbundenen Körpern zur Verfügung zu stellen, die gegen Zugspannungen unempfindlicher sind als dies nach dem Stand der Technik der Fall ist.

Diese Aufgabe wird erfindungsgemäß gelöst durch Brennstoffzellenanordnungen gemäß Hauptanspruch sowie Herstellungsverfahren gemäß weiteren Nebenansprüch. Weitere vorteilhafte Ausgestaltungen ergeben sich jeweils aus den darauf rückbezogenen Unteransprüchen.

### Gegenstand der Erfindung

Im Rahmen der Erfindung wurde eine Brennstoffzellenanordnung entwickelt, die mindestens zwei durch ein Fügematerial verbundene Körper, beispielsweise Brennstoffzellen oder Brennstoffzellenstäpel, umfasst.

Unter einer Verbindung mit Fügematerial im Sinne dieser Erfindung wird verstanden, dass zwischen den beiden Körpern ein schmaler Spalt vorhanden ist, der zumindest teilweise mit einem Fügematerial belegt ist. Eine solche Verbindung lässt sich beispielsweise herstellen, indem auf einen der beiden Körper ein zunächst flüssiges Fügematerial aufgetragen wird und die Körper anschließend zusammengepresst werden. Das Fügematerial, wie etwa ein Glaslot, kann aber auch zunächst in fester Form auf einen der beiden Körper aufgebracht und vor dem Zusammenpressen durch Erwärmen verflüssigt werden. Beim Zusammenpressen bildet sich dann eine dünne Schicht aus Fügematerial in dem Spalt aus. Indem diese Schicht anschließend verfestigt wird, hält sie die beiden Körper zusammen. Das Verfestigen kann durch Absenken der Temperatur oder, wie beispielsweise bei einem Glaslot, durch Auskristallisation erfolgen. In letzterem Fall löst sich die Verbindung bei einem späteren erneuten Erwärmen der Anordnung über die Erweichungstemperatur des Fügematerials nicht mehr.

Die Scherfestigkeit des Fügematerials ist größer als seine Zugfestigkeit. Die Anordnung ist derart, dass zumindest ein erster Teil des Fügematerials nicht koplanar zu einem zweiten Teil des Fügematerials angeordnet ist. Dabei muss der zweite Teil des Fügematerials nicht gleichzeitig mit dem ersten Teil in die Anordnung eingebracht worden.

Durch diese Anordnung wird erreicht, dass jedwede äußere Zugspannung, die orthogonal auf den ersten Teil des Fügematerials wirkt, zumindest teilweise vom zweiten Teil des Fügematerials aufgenommen (kompensiert) wird. Der zweite Teil des Fügematerials wird dabei zumindest teilweise mit einer Scherspannung beansprucht, gegen die er deutlich unempfindlicher ist als gegen eine Zugspannung.

Jede Kraftkomponente, die zum ersten Teil des Fügematerials orthogonal ist und diesen daher mit einer Zugspannung beansprucht, ist nicht orthogonal zum zweiten Teil, da die beiden Teile erfindungsgemäß nicht koplanar angeordnet sind. Sie kann vektoriell in eine zu dem zweiten Teil parallele und eine zu diesem Teil orthogonale Komponente zerlegt werden. Somit wird der zweite Teil des Fügematerials grundsätzlich zumindest teilweise mit einer Scherspannung beansprucht, was der Zugbeanspruchung des ersten Teils entgegen wirkt. Die Kontaktfläche des zweiten Teils des Fügematerials mit den Körpern bestimmt darüber, welche Kraft von diesem Teil maximal aufgenommen werden kann, ohne dass der erste Teil mit einer Zugspannung beansprucht wird. Beim Einsatz der Anordnung in Hochtemperatur-Brennstoff zellenstapeln ist diese Kontaktfläche durch die im Interesse einer hohen Leistungsdichte angestrebte flache Bauhöhe der Zellen und Interkonnektoren konstruktionsbedingt begrenzt.

Auf diese Weise wird besonders vorteilhaft die Bruchgefahr der Verbindung zwischen den beiden miteinander zu verfügenden Körpern stark herabgesetzt. Nach dem Stand der Technik versagten diese Verbindungen in der Regel durch eine Beanspruchung des Fügematerials mit einer Zugspannung. Da diese Zugspannung zumindest teilweise in eine unkritische Scherspannung umgewandelt wird, widersteht die Anordnung deutlich größeren Zugkräften. Eine externe Verspannungsvorrichtung mit Spannschrauben, die die Anordnung permanent mit Druckkräften beaufschlagt und so den Zugspannungen bereits im Vorfeld entgegen wirkt, wird entbehrlich. Die mechanische Haltbarkeit einer externen Verspannungsvorrichtung ist somit nicht mehr der begrenzende Faktor für die Haltbarkeit der gesamten Anordnung. Zudem sind Einsatz und Transport der Anordnung ohne eine externe Verspannungsvorrichtung deutlich unkomplizierter, und die Anordnung benötigt weniger Einbauraum.

Unter Körpern im Sinne dieser Erfindung werden insbesondere plattenförmige Körper verstanden. Dies sind Körper, die in einem kartesischen Koordinatensystem in einer Raumdimension eine wesentlich geringere Ausdehnung aufweisen als in den beiden anderen Raumdimensionen, insbesondere solche, die in einer Raumdimension eine Ausdehnung von weniger als 1/5 der Ausdehnung in den beiden anderen Raumdimensionen aufweisen. Jeder Körper kann Verstrebungen oder Stege aufweisen, die in entsprechende Verstrebungen oder Stege des anderen Körpers eingreifen.

Die Materialien des Körpers und des Fügematerials sind vorteilhaft so gewählt, dass eine gute Haftung zwischen ihnen und dem Fügematerial gewährleistet ist. Vorteilhaft ist die Haftung so gut, dass bei zu starker mechanischer Beanspruchung das Fügematerial im Inneren des Spaltes bricht und nicht von der Oberfläche eines der beiden Körper löst. Bestehen die Körper aus Aluminiumoxid oder Chromoxid bildenden wärmefesten Stählen, reißt bei zu großer Beanspruchung der Fügeverbindung in der Regel die oberste Oxidschicht des Stahls vom Rest des Körpers ab.

Die Kompensation einer Zugspannung durch eine Scherspannung wird auch in der erfindungsgemäßen Anordnung gemäß Hauptanspruch genutzt, die im Rahmen der Erfindung gefunden wurde. Diese Anordnung umfasst mindestens zwei durch ein Fügematerial verbundene Körper, wobei die Scherfestigkeit des Fügematerials größer ist als seine Zugfestigkeit. Ein Teil des Fügematerials ist zwischen den beiden Körpern angeordnet.

Unter einer Anordnung des Fügematerials zwischen den beiden Körpern wird insbesondere verstanden, dass die beiden Körper durch einen Spalt beabstandet sind, welcher wenigstens zum Teil mit Fügematerial belegt ist.

Die Anordnung gemäß Hauptanspruch umfasst ein Verbindungselement, das zu wenigstens einem Teil des zwischen beiden Körpern angeordneten Fügematerials nicht koplanar angeordnet ist. Zwischen diesem Verbindungselement und wenigstens eine der beiden Körper ist ein weiterer Teil des Fügematerials angeordnet.

Unter einer Verbindung des Verbindungselements zu mindestens einem Körper wird insbesondere verstanden, dass zwischen dem Verbindungselement und dem Körper ein Spalt vorhanden ist, der zumindest teilweise mit einem Fügematerial belegt ist. Dabei kann es sich um das gleiche Fügematerial handeln, das zwischen den Körpern angeordnet ist, oder auch um ein anderes. Insbesondere muss das Fügematerial, das mindestens einen Körper und das Verbindungselement verbindet, nicht zum gleichen Zeitpunkt in die Anordnung eingebracht werden wie das zwischen den Körpern angeordnete Fügematerial.

Jede Kraft, die orthogonal zu dem zwischen den Körpern angeordneten Fügematerial wirkt und dieses mit einer Zugspannung beansprucht, wirkt auf zumindest einen Teil des zwischen mindestens einem Körper und dem verbindenden Element befindlichen Fügematerials nicht orthogonal. Dieses Fügematerial kompensiert die Zugspannung zumindest teilweise und wird dabei mit einer Scherspannung beansprucht.

Sofern das Verbindungselement nicht, beispielsweise durch Schweißen, an einem der beiden Körper befestigt ist, ist es vorteilhaft durch Fügematerial mit beiden Körpern verbunden, damit es über das Verbindungselement einen Kraftschluss zwischen den beiden Körpern gibt.

In einer bevorzugten Ausgestaltung der Erfindung ist das Verbindungselement orthogonal zu einer Oberfläche eines der beiden Körper angeordnet, die dem anderen Körper zugewandt ist. In dieser Ausgestaltung ist die erfindungsgemäße Kompensation einer Zugspannung durch eine Scherspannung am stärksten. Die orthogonal auf das zwischen den Körpern angeordnete Fügematerial wirkende Kraft wirkt dann auf mindestens einen Teil des zwischen mindestens einem Körper und dem verbindenden Element angeordneten Fügematerials im Wesentlichen in Form einer Scherspannung.

In einer besonders vorteilhaften Ausgestaltung der Erfindung bilden die beiden Körper und das Fügematerial einen gasdichten Raum. Viele technische Bauelemente, wie etwa Brennstoffzellen, umfassen einen gasdichten Raum und stellen ihre Funktion bei Undichtigkeit dieses Raums ganz oder teilweise ein. Werden derartige Bauelemente als erfindungsgemäße Anordnungen realisiert, bleiben sie länger gasdicht und sind robuster gegen mechanische Beanspruchungen.

Vorteilhaft sind die Körper metallisch. Derartige Körper weisen neben einer hohen Gasdichtigkeit auch eine hohe mechanische Stabilität auf. Als Bauteile einer Brennstoffzelle leiten sie den Strom und führen zugleich die Wärme aus dem Inneren der Zelle ab.

In einer weiteren vorteilhaften Ausgestaltung der Erfindung sind die Körper in der Anordnung bei Temperaturen bis zu 1000 °C für mindestens 10000 Stunden dauerhaltbar.

Unter Dauerhaltbarkeit im Sinne dieser Erfindung wird insbesondere verstanden, dass der Körper nicht bricht. Sofern der Körper gasdicht ist, bedeutet Dauerhaltbarkeit außerdem, dass er gasdicht bleibt.

Beispiele für derartige Körper sind Bauteile von Hochtemperaturbrennstoffzellen. Derartige Bauteile bestehen beispielsweise aus hochwärmefesten Stählen, die Aluminiumoxid bildende oder Chromoxid bildende Legierungen umfassen.

In einer besonders vorteilhaften Ausgestaltung der Erfindung weichen die thermischen Ausdehnungskoeffizienten der beiden Körper und des Fügematerials um nicht mehr als 5*10⁻⁶ K⁻¹ voneinander ab. Hierunter wird insbesondere verstanden, dass der Ausdehnungskoeffizient des Fügematerials an den oder die Ausdehnungskoeffizienten der beiden Körper angepasst ist. Dann widersteht die Anordnung häufigen Temperaturwechseln. Bauteile von Brennstoffzellen sind beim An- und Abfahren häufig derartigen Temperaturwechseln ausgesetzt. Beim mobilen Einsatz in Fahrzeugen werden Brennstoffzellen besonders häufig an- und abgefahren. Idealerweise weisen beide Körper und das Fügematerial exakt den gleichen thermischen Ausdehnungskoeffizienten auf. Jede Abweichung verringert beim Einsatz der Anordnung in einer Brennstoffzelle auf Grund der großen thermischen Verspannungskräfte die Lebensdauer.

Vorteilhaft hat das Fügematerial einen Erweichungspunkt oberhalb 700 °C. Dann kann es in heißem Zustand in die Spalte zwischen den beiden Körpern eingebracht und anschließend durch Abkühlen oder auch, wie etwa bei einem Glaslot, durch Auskristallisation, verfestigt werden.

In einer besonders vorteilhaften Ausgestaltung der Erfindung ist das Fügematerial ein Glaslot und hier insbesondere eines mit einem Erweichungspunkt zwischen 700 und 1000 °C. Dann kann die Anordnung besonders einfach durch Beaufschlagung mit einer Druckkraft und kurzzeitiges Erwärmen hergestellt werden. Glaslote sind bevorzugte Fügematerialien für Brennstoffzellen und Brennstoffzellenstapel. Jedoch verspröden sie beim Hochtemperatureinsatz durch Kristallisation bereits nach wenigen Stunden. Daher weisen sie nur eine geringe Zugfestigkeit auf. In der erfindungsgemäßen Anordnung wird nun die hohe Scherfestigkeit des Glaslots genutzt, um die Verbindung zwischen den beiden Körpern gegen unzulässig hohe Zugbeanspruchungen zu schützen. Dadurch ist es nicht mehr erforderlich, die Anordnung von außen durch externe Verspannungsvorrichtungen mit Druckkräften zu beaufschlagen, die derartigen Zugbeanspruchungen bereits im Vorfeld entgegenwirken._Ein weiterer Vorteil des Glaslots als Fügematerial ist, dass es nach erfolgter Auskristallisation bei einer erneuten Erwärmung über seinen Erweichungspunkt hinaus nicht mehr erweicht. Somit ergeben sich aus der Erweichungstemperatur des Glaslots im beanspruchten Bereich keine Einschränkungen hinsichtlich der Betriebstemperatur von Hochtemperaturbrennstoffzellen, in denen die Anordnung eingesetzt werden kann.

Im Rahmen der Erfindung wurde ein Verfahren zur Herstellung der erfindungsgemäßen Anordnungen entwickelt.

Für die Herstellung der Anordnung mit Verbindungselement wird zunächst auf mindestens einem Oberflächenelement mindestens eines der beiden Körper oder des Verbindungselements Fügematerial aufgetragen. Anschließend werden die Körper und das Verbindungselement zusammengefügt. Durch die Krafteinwirkung beim Zusammenfügen wird nun jedoch Fügematerial in mindestens einen Spalt zwischen mindestens einem Körper und dem Verbindungselement gedrückt.

Sofern das Verbindungselement nicht, wie beispielsweise durch Schweißen, an einem der Körper befestigt ist, sollte Fügematerial in jeweils mindestens einen Spalt zwischen jedem der beiden Körper und dem Verbindungselement gedrückt werden, um einen Kraftschluss zwischen den beiden Körpern über das Verbindungselement sicherzustellen.

Bein erfindungsgemäßen Verfahren ist der Vorteil , dass es erfindungsgemäße Anordnungen liefert, jedoch nur wenige gezielte Modifikationen der Herstellungsverfahren für Anordnungen nach dem Stand der Technik erfordert. Dadurch können Fertigungslinien für die Massenfertigung von Anordnungen nach dem Stand der Technik einfach und kostengünstig auf die Herstellung erfindungsgemäßer Anordnungen umgerüstet werden.

Für das Verfahren wird vorteilhaft insbesondere ein Glaslot als Fügematerial gewählt. Glaslote sind vorteilhafte Fügematerialien für Hochtemperaturbrennstoffzellen. Sie sind insbesondere elektrisch isolierend. Dadurch wird in einem Brennstoffzellenstapel verhindert, dass Zellen durch Kurzschlüsse überbrückt und somit wirkungslos werden.

Vorteilhaft wird ein Glaslot mit einem Erweichungspunkt zwischen 700 °C und 1000 °C als Fügematerial gewählt. Dieser Temperaturbereich liegt knapp oberhalb des vorteilhaften Arbeitsbereichs für Hochtemperaturbrennstoffzellen. Sofern die Körper Bauteile für Hochtemperaturbrennstoffzellen sind, werden sie durch diese Temperaturen noch nicht beschädigt. Als Glaslot ist insbesondere ein Magnesium-Aluminium-Silikat geeignet.

Bei ausreichend langer Erwärmung über den Erweichungspunkt kristallisiert das Glaslot aus. Danach erweicht es bei einem erneuten Erwärmen über den Erweichungspunkt, etwa beim Einsatz in einer Hochtemperaturbrennstoffzelle, nicht mehr.

In einer weiteren vorteilhaften Ausgestaltung der Erfindung werden die Körper bereits vor dem Aufbringen des Fügematerials, das sie mit dem Verbindungselement verbindet, fest miteinander verbunden. Für diese feste Verbindung kann insbesondere weiteres Fügematerial gewählt werden, das beispielsweise zwischen die Körper eingebracht und verfestigt wird.

Beispielsweise können die Brennstoffzellen und Interkonnektoren eines Brennstoffzellenstapels zunächst so durch Glaslot untereinander verbunden werden, dass die gesamte Anordnung gasdicht ist. Sodann können die Verbindungselemente zur zusätzlichen Stabilisierung in den Brennstoffzellenstapel eingebracht werden, ohne dass bei diesem Einbringen die Gefahr besteht, dass der Brennstoffzellenstapel beschädigt wird.

### Spezieller Beschreibungsteil

Nachfolgend wird der Gegenstand der Erfindung anhand von Figuren näher erläutert, ohne dass der Gegenstand der Erfindung dadurch beschränkt wird. Es ist gezeigt:
- Figur 1:: Beispiel einer nicht beanspruchten Anordnung.
- Figur 2:: Ausführungsbeispiel der Anordnung gemäß Anspruch 1.
- Figur 3:: Abwandlung des Ausführungsbeispiels aus Figur 2.
- Figur 4:: In einem separaten Fügeschritt herstellbares Ausführungsbeispiel der Anordnung gemäß Anspruch 1.
- Figur 5:: Umlaufende Ummantelung als Ausführungsbeispiel der Anordnung gemäß Anspruch 1.

Wirkungsgleichen Elementen sind grundsätzlich die gleichen Bezugszeichen zugeordnet. Identisch gezeichnete Elemente bezeichnen auch in der Realität identische Elemente, auch wenn in den Figuren aus Platzgründen nicht jedes Vorkommen eines Elements mit einem Bezugszeichen versehen ist. Sämtliche Figuren sind nicht maßstabsgetreu, sondern stark überhöht, um alle wesentlichen Komponenten sichtbar zu machen.

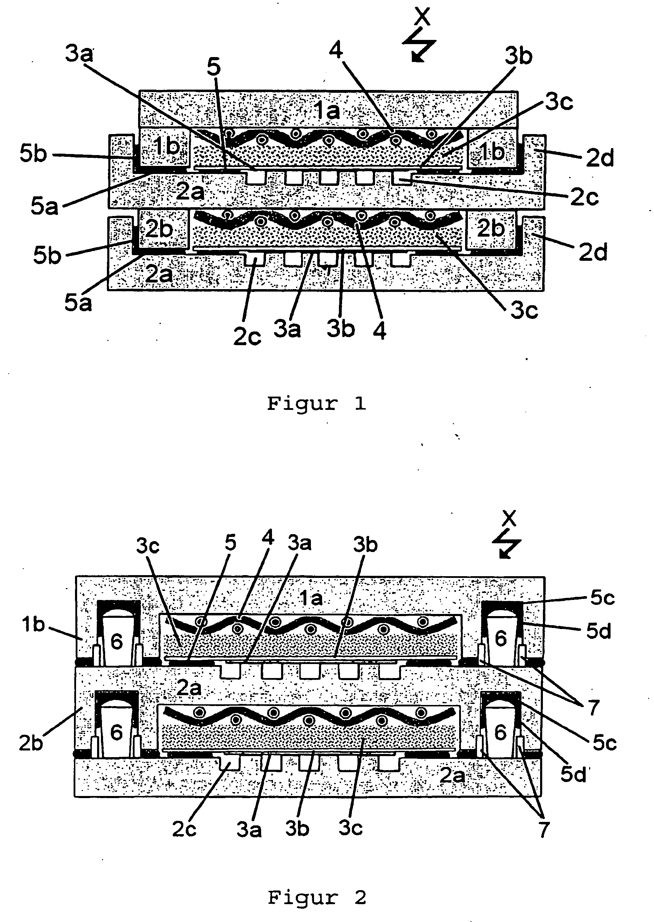

Figur 1 zeigt ein Ausführungsbeispiel der Anordnung als Schnittzeichnung. Die Anordnung stellt einen Brennstoffzellenstapel X dar. Der erste Körper ist die Endplatte (1a, 1b) dieses Brennstoffzellenstapels und umfasst eine flache Platte 1a und einen Steg 1b, mit dem die mechanische Verbindung zu einer bipolaren Platte (2a, 2b, 2c, 2d) des Brennstoffzellenstapels X hergestellt wird. Der Steg 1b ist kein umlaufender Steg, da ober- und unterhalb der Zeichenebene Verteilerstrukturen für Betriebsmittel vorhanden sind. Die Gasdichtigkeit dieser Verteilerstrukturen zum Außenraum hin wird durch weitere, hier nicht eingezeichnete Dichtungen sichergestellt. Die bipolare Platte (2a, 2b, 2c, 2d) ist der zweite Körper der Anordnung. Sie umfasst eine flache Platte 2a, in die Verteilerstrukturen 2c für ein Betriebsmittel eingelassen sind. Diese Verteilerstrukturen 2c grenzen zum Teil an die Kathode 3a der Brennstoffzelle (3a, 3b, 3c), welche neben der Kathode 3a einen Elektrolyten 3b und eine Anode 3c umfasst. Auf der Seite, auf der die Verteilerstrukturen 2c angeordnet sind, ist ein Steg 2d und auf seiner gegenüberliegenden Seite ein Steg 2b angeordnet. Die Stege 2b und 2d sind wie auch der Steg 1b keine umlaufenden Stege, da ober- und unterhalb der Zeichenebene Verteilerstrukturen für Betriebsmittel vorhanden sind. Die Stege 2b und 2d stehen jeweils orthogonal auf der flachen Platte 2a. Die Körper sind beispielsweise durch Fräsen und Schleifen herstellbar, wobei insbesondere die Platten 1a und 2a aber auch mit Hilfe eines Wasserstrahls aus einem Blech ausgeschnitten werden können. Typische Abmessungen für die Platten 1a und 2a sind 3 mm x 150 mm x 200 mm.

Die Endplatte (1a, 1b) und die bipolare Platte (2a, 2b, 2c, 2d, 2e) sind durch ein Fügematerial (5, 5a, 5b) miteinander verbunden. Es handelt sich dabei um ein Glaslot, dessen Scherfestigkeit größer ist als seine Zugfestigkeit. Typischerweise kommt ein Magnesium-Aluminium-Silikat als Glaslot zum Einsatz.

Eine Portion 5a des Fügematerials befindet sich im Spalt zwischen der flachen Platte 2a einerseits und dem Steg 1b andererseits. Eine Portion 5b des Fügematerials dagegen befindet sich im Spalt zwischen dem Steg 2d einerseits und dem Steg 1b andererseits. Somit sind die beiden Portionen 5a und 5b des Fügematerials orthogonal, und damit nicht koplanar, zueinander angeordnet.

Der Brennstoffzellenstapel X wird in der dem ersten Körper (1a, 1b) abgewendeten Richtung fortgesetzt durch eine weitere bipolare Platte (2a, 2b, 2c, 2d) des Brennstoffzellenstapels X, von der hier die Elemente 2b nicht eingezeichnet sind. Der Brennstoffzellenstapel X enthält noch weitere bipolare Platten (2a, 2b, 2c, 2d). Zwei bipolare Platten (2a, 2b, 2c, 2d) sind völlig analog verbunden wie die Endplatte (1a, 1b) und die erste bipolare Platte (2a, 2b, 2c, 2d) des Stapels; es tritt lediglich der Steg 2b an die Stelle des Stegs 1b.

Zwischen den Platten 1a und 2a und auch zwischen zwei Platten 2a ist jeweils eine Brennstoffzelle (3a, 3b, 3c) angeordnet. Auf der Seite, auf der diese Brennstoffzelle über die Verteilerstrukturen 2c in einer Platte 2a mit einem Betriebsmittel versorgt wird, ist sie mit dieser Platte 2a durch hier nicht eingezeichnete Mittel elektrisch kontaktiert. Auf der anderen Seite ist sie über ein elektrisches Kontaktierungsmittel, welches hier als Nickelnetz 4 ausgebildet ist, mit der Platte 2a beziehungsweise 1a kontaktiert. Auf diese Weise kann ein Strom durch den gesamten Brennstoffzellenstapel fließen.

Figur 2 zeigt ein Ausführungsbeispiel der Anordnung gemäß Anspruch 1 als Schnittzeichnung. Hier sind auf der Platte 2a Verbindungselemente 6 befestigt, die als längliche Stifte ausgeführt sind. Die Stifte 6 sind mit der Platte 2a verschweißt. Ihre Ausbildung in Form von Druckknöpfen bildet nach der Verfestigung des Glaslots eine zusätzliche Sicherung gegen das Auseinanderreißen der Anordnung, da dem dicksten Teil des Stifts in Richtung der Zugkraft dann weiteres Fügematerial im Wege steht.

Die Stifte 6 sind zu der Platte 2a orthogonal angeordnet. Dabei liegen die Seitenflächen der Stifte 6 auf der gesamten Länge der Stifte Stegen 1b beziehungsweise 2b gegenüber. Die Bereiche, in die die Stifte 6 eingreifen, sind als Sacklöcher ausgebohrt. Die Stifte 6 sind durch keramische Abstandhalter 7 gegen die Stege 1b beziehungsweise 2b isoliert, damit die Brennstoffzelle (3a, 3b, 3c) nicht durch einen Kurzschluss überbrückt wird. Die Stifte 6 und überhaupt alle wirkungsgleichen Verbindungselemente können auch aus elektrisch isoliertem Material bestehen oder beispielsweise durch Plasmaspritzen mit einem elektrisch isolierenden Material, wie beispielsweise Emaille oder Keramik, beschichtet sein.

Die Endplatte (1a, 1b) und die bipolare Platte (2a, 2b, 2c, 2d) sind durch Fügematerial 5 miteinander verbunden, welches zwischen der Endplatte und der bipolaren Platte angeordnet ist. Die Stifte 6 sind durch Fügematerial (5c, 5d) mit der darüber liegenden Platte 1a beziehungsweise 2a sowie den zugehörigen Stegen 1b beziehungsweise 2b verbunden.

Der Teil 5d des Fügematerials (5c, 5d) ist nicht koplanar zu dem Fügematerial 5 angeordnet, das zwischen der Endplatte (1a, 1b) und der bipolaren Platte (2a, 2b, 2c, 2d) angeordnet ist. Dieser Teil 5d wirkt über seine hohe Scherfestigkeit einer Zugbeanspruchung des Fügematerials 5 entgegen. Der Vorteil dieser Ausführungsform liegt darin, dass dieser Teil 5d bei gleicher Gesamthöhe der Anordnung eine wesentlich größere Ausdehnung haben kann als der analog wirkende Teil 5b in Figur 1. Damit kann er insgesamt wesentlich größere Zugspannungen kompensieren und vom zwischen der Endplatte (1a, 1b) und der bipolaren Platte (2a, 2b, 2c, 2d) befindlichen Fügematerial 5 fernhalten. In einem Brennstoffzellenstapel kommt es im Interesse einer hohen Leistungsdichte darauf an, in einer gegebenen Bauhöhe möglichst viele Zellen stapeln zu können.

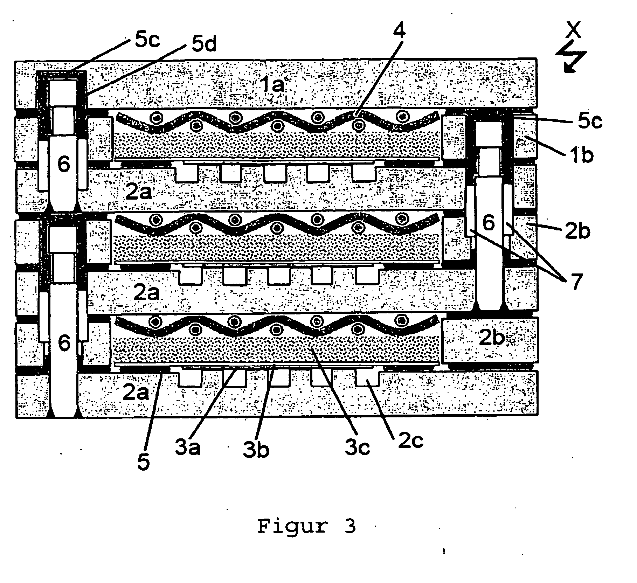

Figur 3 zeigt eine Abwandlung des Ausführungsbeispiels aus Figur 2. Die bipolare Platte (2a, 2b, 2c) enthält hier keinen Steg 2d. Die hier mit 1b und 2b bezeichneten Stege sind wirkungsgleich mit den Stegen 1b und 2b in den Figuren 1 und 2. Sie sind lediglich durch Glaslotverbindungen an den Platten 1a und 2a befestigt, statt mit diesen verschweißt zu sein Die Verbindungselemente 6 sind hier stangenförmig ausgebildet und erstrecken sich über mehrere Platten 2a. Die Stangen 6 im linken und im rechten Teil der Figur 3 sind gegeneinander versetzt angeordnet. Dies hat die Wirkung, dass Fügematerial an den Enden einer Stange durch die jeweils auf der gegenüber liegenden Seite angeordnete Stange davor geschützt wird, mit einer Zugspannung beansprucht zu werden.

Die Stangen 6 vermitteln Kraftschlüsse zwischen benachbarten bipolaren Platten (2a, 2b, 2c) oder auch zwischen der Endplatte (1a, 1b) und einer bipolaren Platte (2a, 2b, 2c), ohne die Endplatte (1a, 1b) oder die bipolare Platte (2a, 2b, 2c) zu berühren. Sie sind mit den Platten, die sie verbinden, nur durch Fügematerial (5c, 5d) verbunden. Auf einem Teil ihrer Länge sind sie durch keramische Abstandhalter 7 von diesen Platten beabstandet. Sie sind somit elektrisch von den Platten isoliert, so dass keine Brennstoffzelle (3a, 3b, 3c) durch eine Stange 6 überbrückt wird. Pro Ecke des Brennstoffzellenstapels ist mindestens eine Stange 6 erforderlich; in der Regel werden aber mehr Stangen 6 verwendet.

Die Ausbildung der Verbindungselemente 6 als Stangen hat zur Folge, dass sich im gesamten' Brennstoffzellenstapel X deutlich mehr Fügematerial 5d unterbringen lässt, das orthogonal zu dem zwischen zwei bipolaren Platten oder zwischen der Endplatte und einer bipolaren Platte angeordneten Fügematerial 5 angeordnet ist. Somit können wesentlich größere Zugspannungen kompensiert und von diesem Fügematerial 5 ferngehalten werden.

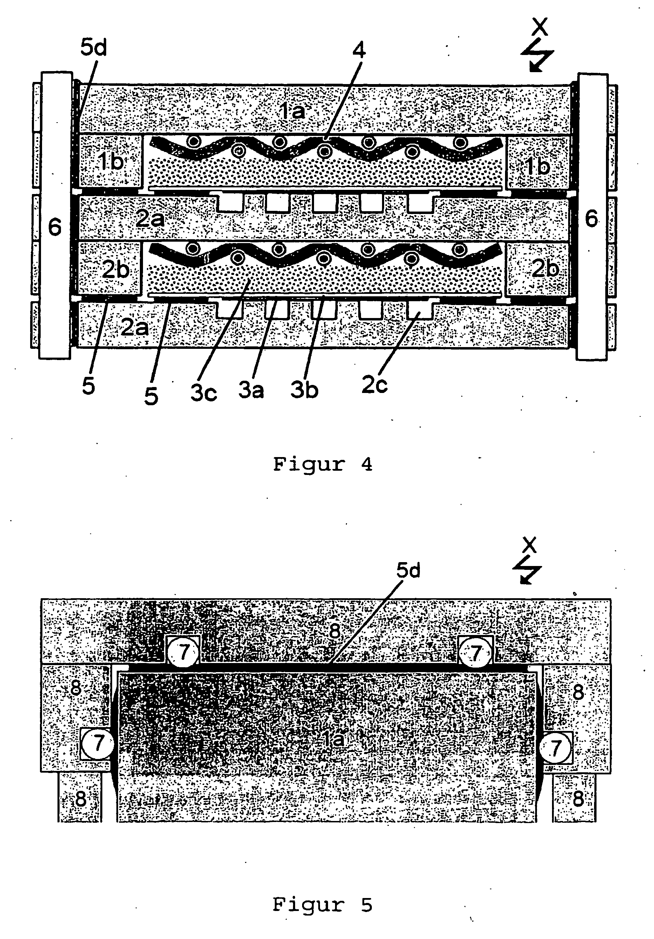

In Figur 4 sind die Verbindungselemente 6 als Stangen ausgebildet, die über die gesamte Höhe des Brennstoffzellenstapels ragen. Sie werden nach dem Zusammenfügen der Brennstoffzellen, bipolaren Platten und Endplatten in seitliche Vertiefungen (Nuten) im Randbereich des Stapels eingesetzt. Die Stangen berühren die metallischen Komponenten 1a, 1b, 2a und 2b des Brennstoffzellenstapels nicht, sondern sind nur über Fügematerial 5d mit ihnen verbunden. Die Stangen können aber auch aus elektrisch isolierendem Material bestehen oder mit einem elektrisch isolierenden Material, wie beispielsweise Emaille oder Keramik, beschichtet sein.

Der Vorteil dieser Ausführungsform ist, dass sich das Fügematerial 5d fast über alle Ebenen des Brennstoffzellenstapels X erstreckt. Somit kann eine noch größere Zugspannung kompensiert und vom Fügematerial 5 ferngehalten werden. Zudem kann der Brennstoffzellenstapel in zwei Etappen hergestellt werden, wobei in der ersten Etappe das Fügematerial 5 verfestigt wird und erst in der zweiten Etappe das weitere Fügematerial 5d sowie die Stangen 6 in den Brennstoffzellenstapel eingebracht werden. Dadurch entfällt das Risiko, dass bei der Montage der Stangen 6 zwei bipolare Platten (2a, 2b, 2c) oder die Endplatte (1a, 1b) und eine bipolare Platte (2a, 2b, 2c) durch unbeabsichtigtes mechanisches Anrucken gegeneinander kurzgeschlossen werden oder durch ebendieses Anrucken die Gasdichtigkeit einer Brennstoffzelle beeinträchtigt wird.

Figur 5 ist, im Gegensatz zu den Figuren 1 bis 4, eine Aufsicht. Sie zeigt einen Ausschnitt eines Ausführungsbeispiels, bei dem der Brennstoffzellenstapel X eine umlaufende, korsettartige Ummantelung 8 umfasst. Die Ummantelung erfüllt somit eine ähnliche Funktion wie die als Stangen ausgebildeten Stifte 6 in Figur 4. Die Brennstoffzellen (3a, 3b, 3c) sowie die bipolaren Platten (2a, 2b, 2c, 2d) des mit der Endplatte 1a abschließenden Brennstoffzellenstapels sind in dieser Aufsicht nicht sichtbar. Die Ummantelung 8 ist mit einigen keramischen Abstandhaltern 7 versehen, die gewährleisten, dass die Ummantelung 8 weder die Endplatte (1a, 1b) noch eine bipolare Platte (2a, 2b, 2c, 2d) berührt. In der Regel sind mindestens zwei keramische Abstandhalter 7 pro Ecke des Brennstoffzellenstapels notwendig.

Auch bei der Fertigung dieses Ausführungsbeispiels kann zuerst das hier nicht eingezeichnete Fügematerial 5 verfestigt werden, welches zwischen zwei bipolaren Platten (2a, 2b, 2c, 2d, 2e) oder zwischen der Endplatte (1a, 1b) und einer bipolaren Platte (2a, 2b, 2c, 2d, 2e) angeordnet ist. Anschließend können das Fügematerial 5d und die Ummantelung 8 eingebracht werden. Analog zum in Figur 4 dargestellten Ausführungsbeispiel vermeidet eine derartige Fertigung Defekte im Brennstoffzellenstapel, die zu Kurzschlüssen oder Gaslecks führen.

Der Vorteil dieser Ausführungsform ist, dass zwischen der Stapelung aus Brennstoffzellen, bipolaren Platten und Endplatten einerseits und der korsettartigen Ummantelung 8 andererseits eine sehr große Menge an Fügematerial 5d angeordnet ist. Somit können sehr hohe Zugspannungen vom in dieser Aufsicht nicht sichtbaren Fügematerial 5 ferngehalten werden.

Zusätzlich bildet die korsettartige Ummantelung 8 für sich bereits eine erste Barriere gegen äußere mechanische Einwirkungen, wie etwa Schläge, auf den Brennstoffzellenstapel. Nach dem Stand der Technik musste der Brennstoffzellenstapel permanent durch eine externe Verspannungsvorrichtung vor derartigen Einwirkungen geschützt werden.

## Patentansprüche

1. Brennstoffzellenanordnung, umfassend mindestens zwei durch ein Fügematerial (5) verbundene Körper (1, 2), wobei die Scherfestigkeit des Fügematerials (5) größer ist als seine Zugfestigkeit und ein Teil des Fügematerials (5) zwischen den beiden Körpern (1, 2) angeordnet ist,
**dadurch gekennzeichnet, dass**
- ein Verbindungselement (6, 7, 8) zu wenigstens einem Teil des zwischen den Körpern angeordneten Fügematerials (5) nicht koplanar angeordnet ist, und
- ein weiterer Teil (5c, 5d) des Fügematerials (5) zwischen dem Verbindungselement (6, 7, 8) und wenigstens einem der beiden Körper (1, 2) angeordnet ist.

2. Brennstoffzellenanordnung nach Anspruch 1, **dadurch gekennzeichnet, dass** das Verbindungselement (6, 7, 8) orthogonal zu einer Oberfläche eines der beiden Körper (1, 2) angeordnet ist, die dem anderen Körper zugewandt ist.

3. Brennstoffzellenanordnung nach einem der Ansprüche 1 bis 2,
**gekennzeichnet durch** einen von den beiden Körpern (1, 2) und dem Fügematerial (5) gebildeten gasdichten Raum.

4. Brennstoffzellenanordnung nach einem der Ansprüche 1 bis 3,
**gekennzeichnet durch** metallische Körper (1, 2).

5. Brennstoffzellenanordnung nach einem der Ansprüche 1 bis 4,
**gekennzeichnet durch** Körper (1, 2), die bei Temperaturen bis zu 1000 °C für mindestens 10000 Stunden dauerhaltbar sind.

6. Brennstoffzellenanordnung nach einem der Ansprüche 1 bis 5,
**dadurch gekennzeichnet, dass** die thermischen Ausdehnungskoeffizienten der beiden Körper (1, 2) und des Fügematerials (5) um nicht mehr als 5* 10⁻⁶ K⁻¹ voneinander abweichen.

7. Brennstoffzellenanordnung nach einem der Ansprüche 1 bis 6, mit einem Fügematerial (5) mit einem Erweichungspunkt oberhalb 700 °C.

8. Brennstoffzellenanordnung nach einem der Ansprüche 1 bis 7,
**gekennzeichnet durch** ein Glaslot als Fügematerial (5).

9. Brennstoffzellenanordnung nach Anspruch 8, **gekennzeichnet durch** ein Glaslot mit einem Erweichungspunkt zwischen 700 °C und 1000 °C.

10. Verfahren zur Herstellung einer Brennstoffzellenanordnung nach einem der Ansprüche 1 bis 9 mit den Schritten:
- auf mindestens einem Oberflächenelement mindestens eines Körpers (1, 2) oder des Verbindungselements (6, 7, 8) wird Fügematerial (5) aufgetragen;
- die Körper (1, 2) und das Verbindungselement (6, 7, 8) werden zusammengefügt;
- durch die Krafteinwirkung beim Zusammenfügen wird Fügematerial (5c, 5d) in mindestens einen Spalt zwischen mindestens einem Körper (1, 2) und dem Verbindungselement (6, 7, 8) gedrückt.

11. Verfahren nach Anspruch 10, **dadurch gekennzeichnet, dass** die Körper (1, 2) vor dem Aufbringen des Fügematerials (5) bereits fest miteinander verbunden werden.

12. Verfahren nach Anspruch 11, **dadurch gekennzeichnet, dass** für die feste Verbindung weiteres Fügematerial (5) gewählt wird.

13. Verfahren nach einem der Ansprüche 10 bis 12, **dadurch gekennzeichnet, dass** ein Glaslot als Fügematerial (5) gewählt wird.

14. Verfahren nach Anspruch 13, **dadurch gekennzeichnet, dass** ein Glaslot mit einem Erweichungspunkt zwischen 700 °C und 1000 °C als Fügematerial (5) gewählt wird.

15. Verfahren nach einem der Ansprüche 13 bis 14, **dadurch gekennzeichnet, dass** ein Magnesium-Aluminium-Silikat als Glaslot gewählt wird.

## Claims

1. Fuel cell assembly, comprising at least two bodies (1, 2) connected with a joining material (5), in which the shear strength of the joining material (5) is greater than its tensile strength and a part of the joining material (5) is arranged between the two bodies (1, 2),
**characterised in that**
- a connecting element (6, 7, 8) is arranged in a non coplanar way to at least a part of the joining material (5), which is arranged between the bodies, and
- a further part (5c, 5d) of the joining material (5) is arranged between the connecting element (6, 7, 8) and at least one of the two bodies (1, 2).

2. Fuel cell assembly according to claim 1, **characterised in that** the connecting element (6, 7, 8) is arranged orthogonally to a surface of one of the two bodies (1, 2), which is facing the other body.

3. Fuel cell assembly according to one of claims 1 to 2, **characterised by** a gastight area, which is formed by one of the two bodies (1, 2) and the joining material (5).

4. Fuel cell assembly according to one of claims 1 to 3, **characterised by** metal bodies (1, 2).

5. Fuel cell assembly according to one of claims 1 to 4, **characterised by** bodies (1, 2), which may withstand temperatures of up to 1000° C for at least 10000 hours.

6. Fuel cell assembly according to one of claims 1 to 5, **characterised in that** the thermal expansion coefficients of the two bodies (1, 2) and the joining material (5) deviate from each other by not more than 5*10⁻⁶ K⁻¹.

7. Fuel cell assembly according to one of claims 1 to 6 with a joining material (5) with a softening point above 700° C.

8. Fuel cell assembly according to one of claims 1 to 7, **characterised by** a solder glass as the joining material (5).

9. Fuel cell assembly according to claim 8, **characterised by** a solder glass with a softening point of between 700° C and 1000° C.

10. Method for the production of a fuel cell assembly according to one of claims 1 to 9 with the steps:
- joining material (5) is applied to at least one surface element of at least one body (1, 2) or of the connecting element (6, 7, 8);
- the bodies (1, 2) and the connecting element (6, 7, 8) are jointed together;
- joining material (5c, 5d) is pressed into at least one gap between at least one body (1, 2) and the connecting element (6, 7, 8) through the effect of force when jointing together.

11. Method according to claim 10, **characterised in that** the bodies (1, 2) are already firmly connected together before the application of the joining material (5).

12. Method according to claim 11, **characterised in that** further joining material (5) is selected for the firm connection.

13. Method according to one of claims 10 to 12, **characterised in that** a solder glass is selected as the joining material (5).

14. Method according to claim 13, **characterised in that** a solder glass with a softening point of between 700° C and 1000° C is selected as the joining material (5).

15. Method according to one of claims 13 to 14, **characterised in that** a magnesium aluminium silicate is selected as the solder glass.

## Revendications

1. Agencement de pile à combustible, comprenant au moins deux corps (1, 2) liés par un matériau de jonction (5), la résistance au cisaillement du matériau de jonction (5) étant supérieure à sa résistance à la traction et une partie du matériau de jonction (5) étant disposée entre les deux corps (1, 2),
**caractérisé en ce que**
- un élément de liaison (6, 7, 8) avec au moins une partie du matériau de jonction (5) entre les corps n'est pas agencé de manière coplanaire, et
- une autre partie (5c, 5d) du matériau de jonction (5) est disposée entre l'élément de liaison (6, 7, 8) et l'un au moins des deux corps (1, 2).

2. Agencement de pile à combustible selon la revendication 1, **caractérisé en ce que** l'élément de liaison (6, 7, 8) est disposé orthogonalement à une surface de l'un des deux corps (1, 2) qui est tournée vers l'autre corps.

3. Agencement de pile à combustible selon l'une des revendications 1 à 2,
**caractérisé par** un espace étanche aux gaz formé par les deux corps (1, 2) et le matériau de jonction (5).

4. Agencement de pile à combustible selon l'une des revendications 1 à 3,
**caractérisé par** des corps (1, 2) métalliques.

5. Agencement de pile à combustible selon l'une des revendications 1 à 4,
**caractérisé par** des corps (1, 2) qui peuvent être maintenus durablement à des températures allant jusqu'à 1000°C pendant au moins 10000 heures.

6. Agencement de pile à combustible selon l'une des revendications 1 à 5,
**caractérisé en ce que** le coefficient de dilatation thermique des deux corps (1, 2) et celui du matériau de jonction (5) ne s'écartent pas l'un de l'autre de plus de 5*10⁻⁶ K⁻¹.

7. Agencement de pile à combustible selon l'une des revendications 1 à 6, comprenant un matériau de jonction (5) dont le point de ramollissement est supérieur à 700°C.

8. Agencement de pile à combustible selon l'une des revendications 1 à 7,
**caractérisé par** un verre de scellement en tant que matériau de jonction (5).

9. Agencement de pile à combustible selon la revendication 8, **caractérisé par** un verre de scellement dont le point de ramollissement se situe dans la plage de 700°C à 1000°C.

10. Procédé de fabrication d'un agencement de pile à combustible selon l'une des revendications 1 à 9, comprenant les étapes consistant à :
- déposer un matériau de jonction (5) sur au moins un élément de surface d'au moins un corps (1, 2) ou de l'élément de liaison (6, 7, 8) ;
- assembler les corps (1, 2) et l'élément de liaison (6, 7, 8) ;
- lors de l'assemblage, comprimer sous l'action d'une force le matériau de jonction (5c, 5d) dans au moins un interstice entre au moins un corps (1, 2) et l'élément de liaison (6, 7, 8).

11. Procédé selon la revendication 10, **caractérisé en ce que** les corps (1, 2) sont déjà reliés fixement les uns aux autres avant le dépôt du matériau de jonction (5).

12. Procédé selon la revendication 11, **caractérisé en ce que** du matériau de jonction (5) supplémentaire est choisi pour l'assemblage fixe.

13. Procédé selon l'une des revendications 10 à 12, **caractérisé en ce qu'**un verre de scellement est choisi comme matériau de jonction (5).

14. Procédé selon la revendication 13, **caractérisé en ce qu'**un verre de scellement dont le point de ramollissement se situe dans la plage de 700°C à 1000°C est choisi comme matériau de jonction (5).

15. Procédé selon l'une des revendications 13 à 14, **caractérisé en ce qu'**un aluminosilicate de magnésium est choisi comme verre de scellement.
